# EUROPÄISCHE PATENTSCHRIFT

(11) **EP 1 665 734 B1**
(45) Veröffentlichungstag und Bekanntmachung des Hinweises auf die Patenterteilung: **27.02.2008**
(21) Anmeldenummer: 04766610.2
(22) Anmeldetag: 26.08.2004
(51) Int. Cl.: H04L 29/08, H04Q 11/04, H04M 7/00

(54) **VERFAHREN ZUM BEHANDELN EINER VERBINDUNGSORIENTIERTEN IP VERBINDUNG NACH NICHTVERFÜGBARKEITSSITUATIONEN**
METHOD FOR PROCESSING A CONNECTION-MODE IP CONNECTION ACCORDING TO NON-AVAILABILITY SITUATIONS
PROCEDE POUR TRAITER UNE COMMUNICATION IP EN MODE CONNEXION A LA SUITE D'UNE INDISPONIBILITE

(30) Priorität: 24.09.2003 DE 10344344
(43) Veröffentlichungstag der Anmeldung: 07.06.2006
(73) Patentinhaber: SIEMENS AKTIENGESELLSCHAFT, 80333 München (DE)
(72) Erfinder: RAISCH, Jürgen, 81479 München (DE); SCHRÜFER, Wolfgang, 85757 Karlsfeld (DE)
(86) Internationale Anmeldenummer: PCT/EP2004/051921
(87) Internationale Veröffentlichungsnummer: WO 2005/032103

(56) Entgegenhaltungen:
- US-A1- 2001 056 492
- US-A1- 2003 014 684
- TANENBAUM A S: "Computer Networks, Third Edition, 6.2.6 Crash Recovery" 1996, PRENTICE-HALL , XP002309421 Seite 508 - Seite 510
- "White paper - Transforming Copper to Gold - High-revenue Voice-over-DSL Services for Incumbent Carriers" 2000, LUCENT TECHNOLOGIES , XP002309422 Absatz [4.1.2]

## Beschreibung

Die Erfindung betrifft ein Verfahren gemäss dem Oberbegriff von Patentanspruch 1.

Die bislang über herkömmliche leitungsvermittelte Telekommunikationsnetze geführte Kommunikation zwischen Teilnehmern, wie beispielsweise ISDN/ PSTN Teilnehmern, wird bei neueren Kommunikationsarchitekturen über IP Netze geführt. Als Endgeräte können beispielsweise herkömmliche ISDN/ PSTN Endgeräte an Abschlusseinrichtungen (Integrated Access Devices, IAD) von xDSL-Strecken, oder aber auch IP-basierte Endgeräte mit entsprechender IP-basierter Signalisierung (H.323/ SIP) eingesetzt werden.

Die angesprochenen Abschlusseinrichtungen werden von Steuereinrichtungen oder Kontrolleinheiten gesteuert, die Teil eines paketbasierten Vermittlungssystems sein können. Zwischen Kontrolleinheit und Abschlusseinrichtung wird eine Vielzahl von verbindungsorientierten IP Kommunikationsbeziehungen/Verbindungen (z.B. TCP, SCTP) geführt (z. B. 25.000). Zur Steuerung der Verbindungen müssen verbindungsbezogene Daten (wie z. B. Transmission Control Block, Quelladressen, Zieladressen, der Status der Verbindung oder statistische Daten etc.) in der Abschlusseinrichtung und der Kontrolleinheit abgelegt sein. Nichtverfügbarkeitssituationen der Kontrolleinheit (z.B. durch Ausfall (Fehler), Reset-Befehl oder durch manuelle Umkonfiguration) werden in der Abschlusseinrichtung erkannt. Bei verbindungsorientierten IP Verbindungen besteht nun das Problem, dass diese bei Wiederverfügbarkeit der Kontrolleinheit nur dann weiterbenutzt werden können, wenn alle verbindungsbezogenen Daten der Verbindungen nach wie vor in der Kontrolleinheit vorhanden sind. Dies ist aber bei einer wiederverfügbaren Kontrolleinheit in der Regel nicht der Fall.

Mit dem Ausfall der Kontrolleinheit gehen auch die verbindungsbezogenen Daten verloren. Dies bedeutet, dass eine wiederverfügbare Kontrolleinheit, die über die - aus Sicht der Abschlusseinrichtung - noch aktiven Verbindungen Nachrichten empfängt, diese keiner IP Verbindung zuordnen kann. Aufgrund der Nichtverfügbarkeit der Kontrolleinheit wird aus deren Sicht die Kommunikationsbeziehung zur Abschlusseinrichtung inaktiv. Die von letztere empfangenen Nachrichten werden zu out-of-the-blue Nachrichten.

Beim Stand der Technik muss die IP Verbindung nun neu aufgebaut bzw. wiederhergestellt werden (Restart). Dies bedeutet aber auch, dass alle ankommenden Nachrichten vom Zeitpunkt des Ausfalls bis zur Wiederherstellung der IP Verbindung verloren gehen, da sie von der Transportschicht verworfen werden. Der Aufbau/ Wiederherstellung einer einzelnen IP Verbindung erfolgt sehr schnell, der Aufbau mehrerer IP Verbindungen erfolgt sequentiell. Da die Kommunikation über die Steuereinrichtung über eine Vielzahl von IP Verbindungen erfolgt, benötigt daher der Aufbau aller IP Verbindungen abhängig von deren Anzahl insgesamt einen signifikanten Zeitraum. Zumindest die letzte Abschlusseinrichtung ist somit solange gestört, bis alle IP Verbindungen wieder aufgebaut sind.

Problematisch an diesem Stand der Technik ist, dass für die Zeitspanne, die notwendig ist, um alle Verbindungen wieder aufzubauen, die Teilnehmer gestört sind sowie Signalisierungsnachrichten verloren gehen können. Eine falsche Vergebührung durch zu lange Wiederverfügbarkeitszeiten ist ebenso möglich, wie der Ausfall stabiler Verbindungen. Für Datenübertragungen können diese langen Wiederverfügbarkeitszeiten durchaus noch toleriert werden, für Video/ - oder gar Sprachübertragung sind sie allerdings vollkommen inakzeptabel.

Der Erfindung liegt daher die Aufgabe zugrunde, einen Weg aufzuzeigen, wie verbindungsorientierte IP Verbindungen nach Nichtverfügbarkeitssituationen zu behandeln sind, um die Qualität der Kommunikation (QoS) zu verbessern.

Diese Aufgabe wird ausgehend von den im Oberbegriff von Patentanspruch 1 angegebenen Merkmalen durch die im kennzeichnenden Teil beanspruchten Merkmale gelöst.

Ein wesentlicher Vorteil der Erfindung ist in der Minimierung der Dauer der Störung für aktive Kommunikationspartner zu sehen, wobei die Wiederherstellung aller Verbindungen zu passiven Kommunikationspartnern länger dauern darf. Dies wird durch Weitergabe der Nachrichten bei den noch nicht aufgebauten/ wiederhergestellten Verbindungen erreicht, wobei der Nachrichtenverlust minimiert wird. Grundsätzlich wird mit der Erfindung eine einfache, robuste Lösung mit hoher Teilnehmerverfügbarkeit bereitgestellt.

Ein weiterer Vorteil der Erfindung ist darin zu sehen, dass die zur Verfügung stehende Prozessorzeit nur auf die Verbindungen verwendet wird, die jetzt gerade benötigt werden. Dies sind in der Regel die Verbindungen, deren Nachrichten innerhalb einer gewissen Zeitspanne nach der Wiederverfügbarkeit ankommen. Ein generelles Aufbauen aller Verbindungen wird erst in einer späteren Phase nachgeholt. Dadurch steigt die Qualität des Übertragungssystems.

Vorteilhafte Weiterbildungen der Erfindung sind in den abhängigen Ansprüchen angegeben.

Die Erfindung wird im Folgenden anhand zweier figürlich dargestellten Ausführungsbeispiele näher erläutert.

Es zeigen:
- Figur 1: die Konfiguration zwischen einer Abschlusseinrichtung und einer nicht redundant angeordneten Kontrolleinheit,
- Figur 2: die Konfiguration zwischen einer Abschlusseinrichtung und einer redundant angeordneten Kontrolleinheit.

Im Rahmen von Voice over DSL (VoDSL) werden Abschlusseinrichtungen IAD zum Anschluss von analogen und ISDN Telefonen als Remote Gateways eingesetzt. Zum Schalten der Sprache wird MGCP (Media Gateway Control Protocol RFC 2705), zum Tunneln der ISDN Nachrichten wird das IUA Protokoll (ISDN Q.921 - U-ser Adaptation RFC 3057) und als Transport Protokoll wird das SCTP Protokoll (Stream Control Transport Protokoll RFC 2960) eingesetzt. Die Abschlusseinrichtung IAD schließt physikalisch das ISDN Protokoll ab, wird aber vom Switch (periphere Einrichtung PCU) gesteuert.

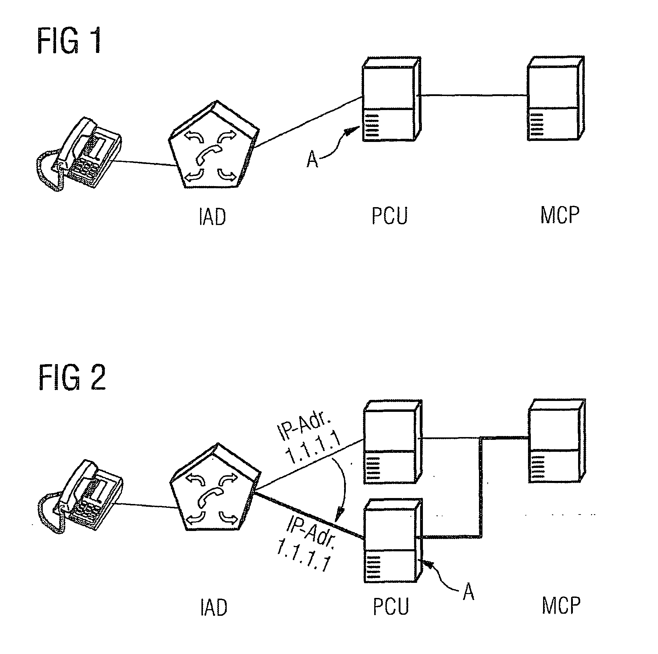

In Fig. 1 ist eine Konfiguration zwischen einer ersten und einer zweiten Steuereinrichtung aufgezeigt. Die erste Steuereinrichtung ist dabei als Abschlusseinrichtung IAD ausgebildet und wird von der zweiten Steuereinrichtung gesteuert. Letztere ist gemäss vorliegendem ersten Ausführungsbeispiel als nicht redundante Kontrolleinheit PCU (Peripheral Control Unit, PCU) ausgebildet. Ferner ist Fig. 1 eine Media Control Platform MCP entnehmbar, die mit der Kontrolleinheit PCU in Wirkverbindung steht.

Zwischen der Abschlusseinrichtung IAD und der Kontrolleinheit PCU werden verbindungsorientierte IP Kommunikationsbeziehungen oder IP Verbindungen geführt (z. B. 25.000). Während alle diese IP Verbindungen in dem Sinne aktiv sind, dass darüber zyklisch Status/ Zustandsabfragen ausgetauscht werden, ist lediglich ein Teil davon - also beispielsweise ca. max. 1.000 - als benutzte IP Verbindungen zu betrachten.

Gemäss vorliegendem ersten Ausführungsbeispiel wird nun davon ausgegangen, dass die Kontrolleinheit PCU aufgrund eines Fehlers ausfällt. Dadurch sind auch bei Wiederverfügbarkeit die darin geführten verbindungsorientierten Daten verlorengegangen, aber in der Abschlusseinrichtung IAD sind diese Daten jedoch noch verfügbar und aus deren Sicht sind die über die ausgefallene Kontrolleinheit PCU geführten IP Verbindungen noch aktiv. Wenn die an die (ausgefallene) Kontrolleinheit PCU gesendeten Daten der Abschlusseinrichtung IAD nicht quittiert werden, versucht diese die Kontrolleinheit PCU gezielt anzusprechen. Erst wenn nach mehrmaligem, erfolglosem Ansprechen die Abschlusseinrichtung IAD keine Informationen erhält, wird die IP Verbindung nach "inaktiv" geschalten, was gegebenenfalls längere Zeit dauern kann.

Erfindungsgemäß wird in der Kontrolleinheit PCU ein Algorithmus A zur Behandlung von verbindungsorientierten IP Verbindungen nach Nichtverfügbarkeitssituationen implementiert. Dieser trägt dafür Sorge, dass die Wiederherstellung einer IP-Verbindung abhängig vom tatsächlichen Kommunikationsbedarf gestartet wird. Dabei werden vom Verbindungsprotokoll (TCP, SCTP etc.) alle Nachrichten, für die die IP Verbindungen aufgrund des Ausfalls der Kontrolleinheit PCU mehr existiert, nicht generell von der Transportschicht wie beim Stand der Technik verworfen, sondern zur weiteren Verarbeitung an die User Schicht, d. h. die Upper Layer Schicht weitergegeben.

In der User Schicht wird dann entschieden wie die empfangene Nachricht weiterverarbeitet werden soll. Hierzu werden Plausibilitätskontrollen durchgeführt. Handelt es sich um eine gültige Nachricht, dann kann sofort von der User Schicht ein erneuter Verbindungsaufbau veranlasst werden und parallel dazu die Nachricht von der Transportschicht an die Media Control Plattform MCP zur weiteren Verarbeitung weitergereicht werden. Umgekehrt kann von der User Schicht ebenfalls zuerst ein Verbindungsaufbau initiiert werden und die Nachricht nach erfolgtem Verbindungsaufbau weiterverarbeitet werden. Nachrichten gehen somit nicht verloren. Im Idealfall wird der Ausfall von keinem der Kommunikationspartner bemerkt.

Grundsätzlich sind alle IP Verbindungen (z. B. 25.000) von der Kontrolleinheit PCU nach Wiederverfügbarkeit zur Abschlusseinrichtung IAD neu aufzubauen/ wiederherzustellen. Wird von der Kontrolleinheit PCU eine Verbindung zur Abschlusseinrichtung IAD aufgebaut, erkennt diese, dass aus ihrer Sicht noch ähnliche aktive IP Verbindungen existieren, kopiert die relevanten verbindungsbezogenen Daten um und stellt damit die IP Verbindung zur Kontrolleinheit PCU wieder her.

Der Verbindungsaufbau aller IP Verbindungen wird nicht einzeln sondern blockweise durchgeführt (z. B. 1.000 Verbindungen pro Schritt). Treffen während dieses Verbindungsaufbauprozesses Nachrichten von benutzten aber noch nicht wiederhergestellten IP Verbindungen ein, werden diese als vorrangig betrachtet. Die diesen Nachrichten zugehörigen IP Verbindungen werden dann vorrangig wiederaufgebaut, indem der allgemeine Verbindungsaufbauprozess an dieser Stelle unterbrochen wird, die in Frage kommende IP Verbindung aufgebaut und der allgemeine Verbindungsaufbauprozess wiederaufgenommen wird. Ebenso werden IP Verbindungen dann vorrangig behandelt, wenn von der Kontrolleinheit PCU eine Nachricht zur der entsprechenden IAD gesendet werden soll.

Aus Sicherheitsgründen kann es sinnvoll sein, den Algorithmus A nicht permanent ablaufen zu lassen, sondern nur für einen definierten Zeitraum. Dieser Zeitraum ist der User Schicht bekannt und kann dem Verbindungsprotokoll mitgeteilt werden. Beispielsweise kann der Algorithmus A beim Wiederanlauf der Kontrolleinheit PCU gestartet und nach der Wiederherstellung aller IP Verbindungen (z. B. 25.000) wieder heruntergefahren werden.

In Fig. 2 ist ein zweites Ausführungsbeispiel aufgezeigt. Demgemäss ist hier ebenfalls eine Konfiguration zwischen einer ersten und einer zweiten Steuereinrichtung aufgezeigt. Die erste Steuereinrichtung ist als Abschlusseinrichtung IAD ausgebildet und wird von der zweiten Steuereinrichtung gesteuert. Letztere ist gemäss vorliegendem zweiten Ausführungsbeispiel als redundante Kontrolleinheit PCU (Peripheral Control Unit, PCU) ausgebildet. Dabei weist eine Hälfte der Kontrolleinheit PCU einen aktiven Betriebszustand auf, während die verbleibende Hälfte der Kontrolleinheit PCU einen Standby Betriebszustand aufweist. Ferner ist Fig. 2 eine Media Control Plattform MCP entnehmbar, die mit der Kontrolleinheit PCU in Wirkverbindung steht.

Im Normalzustand (Verfügbarkeitssituation) werden die verbindungsorientierten IP Verbindungen (z.B. TCP, SCTP) zwischen der Abschlusseinrichtung IAD und der aktiven Hälfte der Kontrolleinheit PCU geführt.

Gemäss vorliegendem zweiten Ausführungsbeispiel wird nun davon ausgegangen, dass die aktive Hälfte der Kontrolleinheit PCU aufgrund eines Fehlverhaltens ausfällt. Aus Sicht der Abschlusseinrichtung IAD sind die über die ausgefallene Kontrolleinheit PCU geführten IP Verbindungen noch aktiv. Der Ausfall wird von der redundant angeordneten Hälfte der Kontrolleinheit PCU sehr schnell erkannt und die IP Adresse der vormals aktiven Hälfte wird auf die standby Hälfte transferiert. Dies hat den Vorteil, dass in der noch aktiven IP Verbindung keine Umadressierung vorgenommen werden muss. Durch den Ausfall der aktiven Hälfte der Kontrolleinheit PCU sind nun auch hier die verbindungsorientierten Daten verlorengegangen, in der Abschlussvorrichtung IAD sind die Daten noch verfügbar.

Erfindungsgemäß ist nun auch hier vorgesehen, den Wiederaufbau der IP-Verbindungen gemäss demselben Algorithmus A wie im ersten Ausführungsbeispiel beschrieben, zu starten. Es werden somit vom Verbindungsprotokoll (TCP, SCTP etc.) alle Nachrichten, für die keine Verbindung mehr existiert, nicht generell von der Transportschicht wie beim Stand der Technik verworfen, sondern zur weiteren Verarbeitung an die User Schicht, d. h. die Upper Layer Schicht weitergegeben. Auch hier kann es sinnvoll sein, den Algorithmus A nicht permanent ablaufen zu lassen, sondern nur für einen definierten Zeitraum. Dieser Zeitraum ist der User Schicht bekannt und kann dem Verbindungsprotokoll mitgeteilt werden. Beispielsweise kann der Algorithmus A beim Wiederanlauf der Kontrolleinheit PCU gestartet und nach der Wiederherstellung aller IP Verbindungen (z. B. 25.000) wieder heruntergefahren werden.

Grundsätzlich ist festzuhalten, dass in beiden Ausführungsbeispielen zwar verbindungsorientierte IP Verbindungen angesprochen worden sind. Die Erfindung ist allerdings nicht auf IP Verbindungen beschränkt. Mit dem erfindungsgemäßen Verfahren können verbindungsorientierte Verbindungen jeglicher Art (wie z. B. ATM, MPLS, Frame Relais etc.) behandelt werden. Ferner wurden in beiden Ausführungsbeispielen IP Verbindungen angesprochen, die funktionell als Signalisierungsverbindungen ausgebildet sind. Dies soll aber keine Einschränkung darstellen, Bearerverbindungen können in gleicher Weise behandelt werden. Schließlich wurde als Nichtverfügbarkeitssituation der Ausfall der Kontrolleinheit PCU angesprochen. Als Nichtverfügbarkeitssituation kommen aber ebenso ein Reset-Befehl oder eine manuelle Umkonfiguration in Betracht.

## Patentansprüche

1. Verfahren zum Behandeln einer Vielzahl von verbindungsorientierten Kommunikationsbeziehungen zwischen einer ersten (IAD) und einer zweiten Steuereinrichtung (PCU), über die Nachrichten ausgetauscht werden,
**dadurch gekennzeichnet,**
**dass** nach Nichtverfügbarkeit der zweiten Steuereinrichtung (PCU) die von der ersten Steuereinrichtung (IAD) gesendeten out-of-the-blue Nachrichten in der zweiten Steuereinrichtung (PCU) der Upper Layer Schicht der verbindungsorientierten Kommunikationsbeziehung zur Verfügung gestellt werden, von der diese als Kriterium zum Wiederherstellen von intakten Kommunikationsbeziehungen derart benutzt werden,
**dass** die vor der Nichtverfügbarkeit der zweiten Steuereinrichtung (PCU) benutzen Kommunikationsbeziehungen bevorzugt vor den restlichen vor der Nichtverfügbarkeit bestehenden Kommunikationsbeziehungen, für die keine Nachrichten empfangen werden, wiederhergestellt werden, indem der allgemeine Wiederherstellungsprozess für die Dauer der Wiederherstellung der in Frage kommenden Kommunikationsbeziehung unterbrochen wird.

2. Verfahren nach Anspruch 1,
**dadurch gekennzeichnet,**
**dass** aufgrund der Nichtverfügbarkeit der zweiten Steuereinrichtung (PCU) aus deren Sicht die Kommunikationsbeziehung zur ersten Steuereinrichtung inaktiv wird.

3. Verfahren nach einem der vorstehenden Ansprüche,
**dadurch gekennzeichnet,**
**dass** die verbindungsorientierten Kommunikationsbeziehungen als IP Verbindungen ausgebildet sind.

4. Verfahren nach einem der Ansprüche 1 bis 3,
**dadurch gekennzeichnet,**
**dass** der Algorithmus (A) beim Wiederanlauf der zweiten Steuereinrichtung (PCU) gestartet und nach der Wiederherstellung aller IP Verbindungen (z. B. 25.000) wieder heruntergefahren wird.

## Claims

1. Method for processing a plurality of connection-mode communication connections between a first (IAD) and a second control device (PCU), by way of which messages are exchanged,
**characterized in that**
following non-availability of the second control device (PCU) the messages (out-of-the-blue messages) in the second control device sent by the first control device (IAD) are made available to the upper layer of the connection-mode communication connection which uses these as a criterion for the recovery of intact communication connections,
the communication connections used prior to the non-availability of the second control device (PCU) are preferably recovered, prior to the remaining communication connections existing prior to non-availability, for which no messages are received, by interrupting the general recovery process for the duration of the recovery of the communication connection in question.

2. Method according to claim 1,
**characterized in that**
as a result of the non-availability of the second control device (PCU), from the latter's viewpoint the communication connection with the first control device becomes inactive.

3. Method according to one of the preceding claims,
**characterized in that**
the connection-mode communication connections are implemented as IP connections.

4. Method according to one of claims 1 to 3,
**characterized in that**
the algorithm (A) is started on restarting the second control device (PCU) and shut down again once all the IP connections (25,000 for example) have been recovered.

## Revendications

1. Procédé pour traiter une pluralité de relations de communication orientées connexions entre un premier dispositif de commande (IAD) et un deuxième dispositif de commande (PCU) via lesquels des messages sont échangés, **caractérisé en ce que**, suite à la non-disponibilité du deuxième dispositif de commande (PCU), les messages «out of the blue» émis par le premier dispositif de commande (IAD) sont, dans le deuxième dispositif de commande (PCU), mis à la disposition de la couche supérieure (Upper Layer) de la relation de communication orientée connexions, par laquelle couche ceux-ci sont utilisés comme critère pour le rétablissement de relations de communication intactes de manière telle que les relations de communication utilisées avant la non-disponibilité du deuxième dispositif de commande (PCU) sont rétablies préférentiellement, avant les relations de communication restantes qui existaient avant la non-disponibilité et pour lesquelles aucun message n'est reçu, par interruption du processus général de rétablissement pour la durée du rétablissement de la relation de communication en question.

2. Procédé selon la revendication 1, **caractérisé en ce que**, en raison de la non-disponibilité du deuxième dispositif de commande (PCU), du point de vue de celui-ci, la relation de communication avec le premier dispositif de commande devient inactive.

3. Procédé selon l'une des revendications précédentes, **caractérisé en ce que** les relations de communication orientées connexions se présentent sous la forme de liaisons IP.

4. Procédé selon l'une des revendications 1 à 3, **caractérisé en ce que** l'algorithme (A) est lancé au redémarrage de la deuxième unité de contrôle (PCU) et est arrêté de nouveau après le rétablissement de toutes les liaisons IP (p. ex. 25 000).
